Europäisches Patentamt

European Patent Office

Office européen des brevets

(11) Publication number: **0 114 898**
**A1**

## (12) EUROPEAN PATENT APPLICATION

(21) Application number: **83100165.6**

(22) Date of filing: **11.01.83**

(51) Int. Cl.³: **B 63 B 1/36**
**B 60 V 1/00**

(43) Date of publication of application:
**08.08.84 Bulletin 84/32**

(84) Designated Contracting States:
**DE FR IT**

(71) Applicant: **Hayes, Bernard Charles**
**515 Hockley Centre 120 Vyse Street**
**Birmingham West Midlands(GB)**

(72) Inventor: **Hayes, Bernard Charles**
**515 Hockley Centre 120 Vyse Street**
**Birmingham West Midlands(GB)**

(74) Representative: **Lewis, Samuel Hewitt et al,**
**FORRESTER & BOEHMERT Widenmayerstrasse 4/l**
**D-8000 München 22(DE)**

(54) Marine vessel with surface friction reducing means.

(57) A marine vessel comprises a hull (10) having at least one hydrofoil, for producing lift by motion in a liquid medium, comprising a lift producing member (17) mounted for rotation relative to the hull (10), means (15) being provided to provide air cushion lift.

Fig.1.

EP 0 114 898 A1

Title: "Marine Vessel"

This invention relates to marine vessels.

An object of the invention is to provide a new and improved marine vessel.

According to one aspect of the invention I provide a marine vessel comprising a hull having at least one hydrofoil, for producing lift by motion in a liquid medium, comprising a lift producing member comprising a wheel or roller mounted for rotation relative to the hull, the lift producing member comprising a liquid medium engageable surface which is deformable to provide a lifting part which has a radius of curvature which is greater than other parts of the surface.

Said surface may be provided by the circumference of a wheel, said wheel having a connecting part which connects the circumference to a central hub part and which permits of movement of the circumference in a generally radially inward direction to provide said part of relatively greater radius of curvature.

The part of relatively greater radius of curvature may have a radius of curvature of infinity and hence rectilinear in longitudinal cross-section.

The connecting part of the wheel may comprise a plurality of spokes which are resilient so as to permit of said generally radially inward movement of part of the surface as the surface rotates so that as a fresh portion of surface comes into contact with the liquid medium, it is moved to said relatively greater radius of curvature condition.

Where the surface is provided by the circumference of a wheel, the surface may comprise a plurality of pivotally inter-connected plates which are connected together to produce a continuous surface at least in said relatively greater radius of curvature condition.

The rotatable member may be driven by power drive means provided on the vessel or may be driven by contact with the water surface, either as a result of direct contact with the water surface or by a drive transmission mechanism from a driving member engaged with the water surface at a location remote from said lift producing member.

The lift producing member may be rotated at a speed such that its peripheral linear speed is greater than the speed of movement of the vessel through the water so that there is slippage between the rotatable member and the water surface in a forwards direction or may be driven at a slower speed than the speed of the vessel through the water so that there is slippage in the reverse direction, or may be driven at the same speed so that there is no slippage relative to the water surface.

Alternatively, means may be provided to brake rotation of the lift producing member from the speed at which it would rotate if it were free to rotate as a result of contact with the water surface.

The vessel may be provided with means to provide air cushion lift which may be utilised at relatively low speeds whilst the hydrofoil lift is used at relatively high speeds.  Both hydrofoil and air cushion lift may be used at intermediate and/or high speed.

The or each lift producing member may be provided in a recess provided in the underside of the vessel so that the peripheral walls of the recess provide a retaining skirt for the air cushion lift producing means which also includes means to pressurise air within the recess.

The vessel may be provided with aerofoil directional control surfaces and stability producing surfaces and, if desired, may be provided with aerofoil surfaces to provide aerodynamic lift.

The lift producing member or members may be provided on a retractable suspension so that said surfaces may be moved out of contact with the water when the vessel is operating in an air cushion lift mode.

The rotatable member may rotate about an axis or axes which are perpendicular to the direction of advance of the vessel and may lie in a horizontal plane and said surface may extend parallel to said axis of rotation.

Alternatively, the rotatable member or members may rotate at other angles, for example an angle lying in a plane transverse to the direction of advancement of the vessel but inclined to the horizontal and vertical and said surface may extend normal to said axis of rotation. This is particularly convenient when a lift producing member is provided one at each of two opposite sides of the vessel to provide lift producing surfaces which are inclined to a horizontal and vertical plane in opposite directions to provide portions which lie in an imaginary generally V-shaped surface, the point of the V being disposed below the central axis of the vessel beneath the water surface.

In the latter case, the rotatable member would be relatively thin and the operative surface of the would lie in a plane inclined downwardly and inwardly with respect to the hull, and the axis of rotation would be inclined in a downward and outwards relative to the hull.

The vessel may be supported solely, when operating in a hydrofoil mode, by a plurality of said lift producing members or may be supported partly as a result of buoyancy of a portion of the hull or of other buoyancy producing members provided on the hull and partly by said lift producing members.

The rotatable lift producing members may, when driven, provide drive for the vessel.

Means may be provided to adjust the angle of rotation of the lift producing members at the angle of attack thereof.

Other propulsion means may be provided to propel the vessel. The other propulsion means may comprise; a screw propeller immersed in the water; or an aerofoil propeller mounted for rotation in the air; or jet propulsion in the air; or water jet propulsion in the water; or a combination of said means, alone or in combination with propulsion achieved as a result of rotation of the lift producing members.

Where the lift producing surfaces rotate at a speed approximately equal to the speed of the vessel through the water, there is a substantial reduction in the frictional drag between the vessel and the water than would otherwise occur.

If desired, the rotatable members may be arranged to permit of the vessel being moved on a solid surface.

Embodiments of the invention will now be described in more detail by way of example, with reference to the accompanying drawings wherein:-

FIGURE 1 is a diagrammatic side elevation partly in section of a vessel embodying the invention;

FIGURE 2 is a front view of the vessel of Figure 1.

Referring to the drawings, a vessel comprises a load carrying hull 10 of suitable aerodynamic profile and having an aerodynamic lateral control surface or rudder 11 at the rear thereof, and ancilliary aerodynamic lift surfaces or wings 12. A recess 13 is provided in the underside of the hull and the peripheral wall 14 of the recess 13 provides a rigid skirt of an air cushion lift providing means comprising the recess 13 and lift fans 15 which provide air under pressure to the recess 13 to provide lift in conventional hovercraft manner. The fans 15 are driven by a prime mover 16 mounted in the hull.

Mounted within the recess 13 are a plurality of hydrofoils comprising lift producing members 17 carried by a support structure 18. Each lift producing member 17 comprises a wheel rotatably mounted on the support structure 18 by a central hub portion 19 which is connected by a connecting part 20 to a peripheral surface 21. The connecting part 20, in the present example, comprises a plurality of sprung spokes and the peripheral surface 21 comprises a plurality of pivotally inter-connected plates, the arrangement being such that as the members 17 rotate each new plate as it comes into contact with the water surface causes an adjacent spoke or spokes to resiliently deform in a generally inward direction so as to tend to flatten the wheel so that the part of the surface which produces lift is of generally flatter or larger radius of curvature than the remainder of the wheel.

In the present example, the wheels 17 are driven from the prime mover 16 to rotate at a linear speed slightly slower than the speed of advancement of the vessel through the water so that a relatively small amount of slip occurs so that adequate lift is achieved, and at the same time, the relative speed between the water and the lift producing surface is reduced thereby reducing drag compared with that which would otherwise occur if the surface did not rotate.

The support structure 18 are arranged to be retractable, for example can be in the form of a generally aircraft type undercarriage so that the lift producing members 17 can be moved upwardly into the recess 13 when the vessel is operating solely in the air cushion lift mode.

If desired, the members 17 can be of such construction, or additional wheels provided, so as to permit of the vessel being transported on land by the wheels 17 or additional wheels.

In the present example, the vessel is propelled by means of at least one jet engine 22 which exhausts through a nozzle 23 at the stern. A speed of the order of 150 kts. and a displacement of 5000 tons are envisaged.

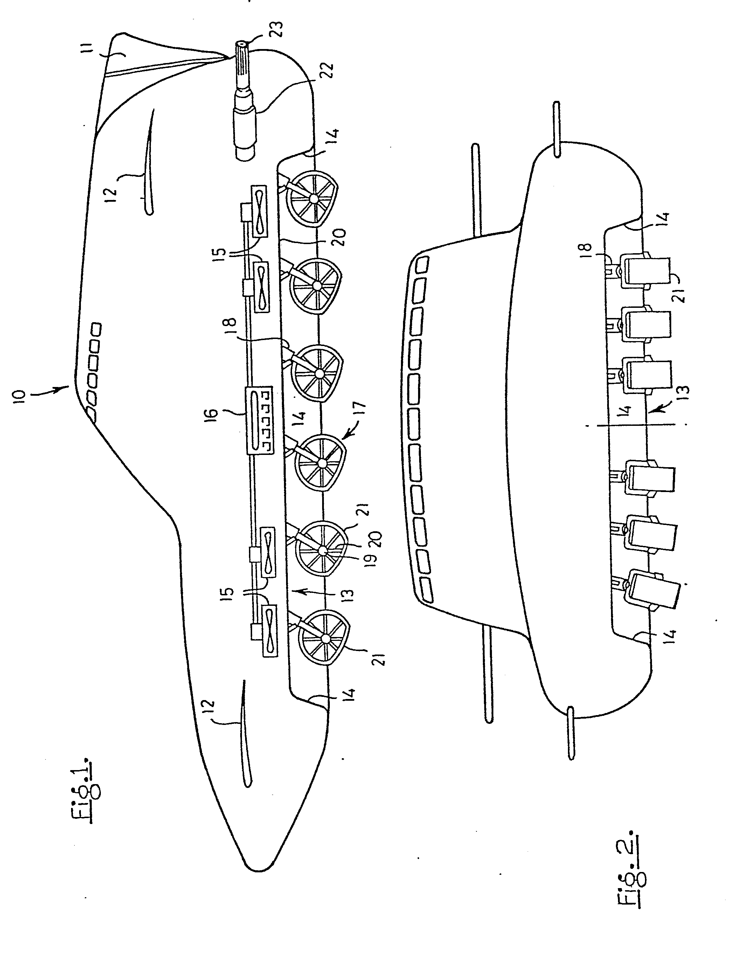

As shown on the right hand side of Figure 2, the axes of rotation of the member 17 are perpendicular to the direction of advance of the vessel and lie in a horizontal plane, and the axes are parallel to their respective lifting surface 21. If desired, as shown in the left hand side of Figure 2, the axes may be inclined to the horizontal so as to be inclined downwardly and inwardly of the hull. Of course, in this case the right hand side would have oppositely inclined axes of rotation. The axes of rotation may all be parallel or may vary as shown in the left hand side of Figure 2.

In an alternative embodiment, the vessel is similar to that illustrated in Figures 1 and 2 except that the lift producing members or wheels 17 are relatively thin and disc-like and also have a solid surface and are arranged so that it is the circular side surface of the member which provides the lift producing surface rather than the peripheral or edge surface as is the case in Figure 4. The axis of rotation of the wheels would be at $90^{\circ}$ to the lifting surface and to the axes illustrated in Figure 2. In this case the axes of rotation would have to be inclined to the vertical and horizontal so that the lift surface has an appropriate angle of attack to the water.

**0114898**

CLAIMS:

1. A marine vessel having a hull (10) with at least one hydrofoil (17), for producing lift by motion in a liquid medium, the hydrofoil (17) characterised in that the lift producing member comprises a wheel or roller mounted for rotation relative to the hull (10), the lift producing member (17) comprising a liquid medium engageable surface (21) which is deformable to provide a lifting part which has a radius of curvature which is greater than other parts of the surface (21).

2. A vessel according to Claim 1 characterised in that said surface (21) is provided by the circumference of a wheel, said wheel having a connecting part (20) which connects the circumference (21) to a central hub portion (19) and which permits of movement of the circumference (21) in a generally radially inward direction to provide said part of relatively greater radius of curvature.

3. A vessel according to Claim 1 or Claim 2 characterised in that means (13,15) are provided to provide air cushion lift.

4. A vessel according to Claim 3 characterised in that the or each lift producing member (17) is provided in a recess (13) provided in the underside of the vessel so that the peripheral walls of the recess provide a retaining skirt for the air cushion lift producing means (13,15) and means (15,16) to pressurise air within the recess.

5. A vessel according to any one of the preceding claims characterised in that the vessel is provided with aerofoil surfaces (11,12) for directional control and/or lift and stability producing surfaces.

6.   A vessel according to any one of the preceding claims characterised in that the lift producing member (17) or members are provided on a retractable suspension (18) so that said members (17) may be moved out of contact with the liquid medium.

7.   A vessel according to any one of the preceding claims characterised in that the or each lift producing member (17) is rotatable about an axis which is perpendicular to the direction of advance of the vessel.

8.   A vessel according to any one of the preceding claims characterised in that a lift producing member is provided one at each of two opposite sides of the vessel to provide lift producing surfaces which are inclined to a horizontal and vertical plane in opposite directions to provide portions which lie in an imaginary generally V-shaped surface, the point of the V being disposed below the central axis of the vessel beneath the water surface.

9.   A vessel according to any one of the preceding claims wherein means are provided to adjust the angle of rotation of the lift producing members (17) at the angle of attack thereof.

10.  A marine vessel comprising a hull (10) having at least one hydrofoil (17) for producing lift by motion in a liquid medium and means (13,15) to provide air cushion lift.

Fig.1.

Fig.2.

0114898

European Patent
Office

EUROPEAN SEARCH REPORT

0114898
Application number

EP 83 10 0165

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-B-1 122 397 (RUDOLPH) <br><br> * Column 1, line 24 - column 2, line 48 * <br><br> --- | 1,3,4, 6,7,10 | B 63 B 1/36 <br> B 60 V 1/00 |
| A | US-A-2 912 033 (NEISLER) <br> * Column 1, lines 33-53; column 5, line 53 - column 6, line 71; column 8, line 36 - column 10, line 41; figures 10-12 * <br><br> --- | 1,2 | |
| A | US-A-3 981 260 (HILBIG) <br> * Column 3, lines 9-17; figures 1-3 * <br><br> --- | 1,2 | |
| A | GB-A- 350 108 (LOMBARDINI) <br> * Page 1, lines 89-97; page 2, lines 62-70; page 2, lines 108-113; page 3, lines 29-35; figures 7,9,15-17 * <br><br> --- | 4,5 | TECHNICAL FIELDS SEARCHED (Int. Cl. ³) |
| A | FR-A- 931 658 (RIGAUD) <br> * Page 2, lines 27-32; figures 9-10 * <br><br> --- | 8,9 | B 63 B <br> B 63 H <br> B 60 F <br> B 60 V |
| A | US-A-4 061 104 (PINCHOT) <br> * Column 9, lines 5-27; column 10, lines 17-33; figures 4A,4B,4C,6D * <br><br> ---     -/- | 8,9 | |

The present search report has been drawn up for all claims

| Place of search THE HAGUE | Date of completion of the search 16-09-1983 | Examiner VOLLERING J.P.G. |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int Cl. ³) |
|---|---|---|---|
| A | US-A-3 125 981 (REYNOLDS) <br> * Column 6, lines 55-60; figure 4 * <br><br> --- | 9 | |
| E | GB-A-2 101 046 (HAYES) <br> * Whole document * <br><br> ----- | 1-10 | |

TECHNICAL FIELDS SEARCHED (Int. Cl. ³)

The present search report has been drawn up for all claims

| Place of search | Date of completion of the search | Examiner |
|---|---|---|
| THE HAGUE | 16-09-1983 | VOLLERING J.P.G. |